# EUROPEAN PATENT SPECIFICATION

(11) **EP 2 610 025 B1**
(45) Date of publication and mention of the grant of the patent: **06.04.2016**
(21) Application number: 11010307.4
(22) Date of filing: 30.12.2011
(51) Int. Cl.: B23H 1/02

(54) **Electric discharge machining method and apparatus**
Verfahren und Vorrichtung zur Funkenerosion
Procédé et dispositif pour l'usinage par électroérosion

(43) Date of publication of application: 03.07.2013
(73) Proprietor: Agie Charmilles SA, 6616 Losone (CH)
(72) Inventor: Maradia, Umang, 8051 Zürich (CH); Knaak, Reto, 6612 Ascona (CH); Dal Busco, Walter, 6600 Locarno (CH)
(74) Representative: De Colle, Piergiacomo

(56) References cited:
- EP-A1- 1 477 257
- US-A- 3 485 990
- US-A- 4 503 309
- GF AGIECHARMILLES: "ZERO WEAR - THE "PERPETUUM MOBILE" OF DIE-SINKING EDM", RESULTS TODAY, no. 4, 1 January 2009 (2009-01-01), pages 28-28, XP007920660,

## Description

### Field of the Invention

The present invention relates to a method for controlling an electric discharge machining apparatus and to an electric discharge machining apparatus performing such a method.

### Background of the Invention

Generally, in known electrical discharge machining, electric energy is applied in the form of discrete electrical impulses across a machining gap filled with a machining fluid or liquid dielectric (e.g. oil). The discrete electrical impulses cause a succession of electrical discharges between a tool electrode and a workpiece. The narrow space between the tool electrode and the workpiece defines the machining gap also referred to as working gap. The electrical discharges lead to a material removal from the workpiece and, additionally, to wear of the tool electrode.

Typically, as material removal proceeds the tool electrode is advanced relatively to the workpiece by servo feed means. The machining gap distance is continuously controlled according to the instantaneous process conditions. A signal representing the current working gap distance (e.g. the ignition delay and/or mean voltage) is compared with a value representing a desired working gap distance (reference value) and the resulting error between these values is computed to generate a new command value for the drive motor in order to adjust the correct working gap distance. In this way the control of the relative position of workpiece and electrode allows the creation of consecutive material-removal discharges.

The material-removal and the discharges lead to a contamination of the machining gap region with erosion debris, process byproducts, thermal decomposition products of the dielectric and gases. It is known to remove such contaminations by flushing the machining gap region with fresh machining fluid and by cyclically retracting the tool electrode away from the workpiece.

From US 4,288,675 A it is known to use (discharge) impulse trains which each consist of multiple machining impulses and to vary the duration and/or the off-time of consecutive impulse trains to reduce electrode wear. The impulse duration of each single impulse and the off-time between each single impulse of the impulse train are preset before machining and depend, e.g. on the electrode materials. The duration or on-time of an impulse train and/or the off-time between consecutive impulse trains is adjusted during machining in accordance with a detected rate of relative advance movement of the tool electrode so as to maintain the current density along machining surfaces substantially constant at a desired value in spite of change in the machining area during relative advance movement of the tool electrode.

From US 4,503,309 A it is known to use increased current pulses intermittently in an impulse train in order to achieve desired current density and increase process stability.

As mentioned, typically the tool electrode is prone to wear. Already from US 3,558,842 A it is known that a protective film forms on the tool electrode under specific conditions in an electric discharge machining process. The protective film is formed, e.g. by products of the working liquid and/or by products resulting from the discharge across the machining gap.

The formation of a protective film can be used to protect the tool electrode and to thereby reduce wear of it For instance, the article "Zero wear - The "Perpetuum Mobile" of die-sinking EDM". downloadable on http://www.gfac.com/fileadmin/user_upload/dev-agiecharmilles/News/Result_today_4/Results-today_04_E_article11.pdf, describes on page 28 an electric discharge machining where a graphite electrode is used in die-sinking EDM. Graphite does not melt, but it sublimes. According to this document, as soon as the EDM process begins, the material removed wanders with the decomposition products from the carbon content dielectric to the graphite electrode. By controlling the reduction in temperature during the process, carbon precipitates on the electrode surface. Thereby a layer is formed on the electrode which protects the original electrode. The EDM process is such controlled that the growth of the layer on the electrode and the wear caused by discharge impulses taking place on the protective layer is in balance. Thus, the wear of the electrode can be reduced.

However, in particular in the meso- and micro-machining, i.e. for example in the meso-scale (instantaneous electrode surface area 10 mm² to 1 mm²) and in the micro-scale (instantaneous electrode surface area between 1 mm² to 0.010 mm² or smaller or smallest dimension on electrode below 1 mm), the electrode wear is also with the above-mentioned machining processes considerable. The instantaneous electrode surface is defined as the projection surface area of the electrode surface over which a electric discharge (spark) is occurring and the smallest dimension of the tool electrode may refer to structures of electrodes, e.g. ribs, where a thickness of the ribs is below 1 mm (irrespective of the length and width of the ribs).

Thus, it is an object of the present invention to provide an improved method for controlling an EDM process, in particular for meso-micro machining, and an improved electric discharge machining apparatus, in particular for meso-micro machining.

### Summary of the Invention

According to a first aspect, the invention provides a method of controlling an electric discharge machining apparatus according to claim 1.

According to a second aspect, the invention provides an electric discharge machining apparatus comprising: a tool electrode, a working table for receiving a workpiece, an impulse generator for generating discharge impulses, and a control for controlling the electric discharge machining apparatus, wherein the control peforms a method of the first aspect.

Further aspects of the invention are set forth in the dependent claims, the following description of the drawings.

### Brief Description of the Drawings

Embodiments of the present invention are explained by way of example with respect to the accompanying drawings, in which:
Fig. 1 shows an embodiment of a die-sinking discharge machining apparatus in accordance with the present invention;
Figs. 2a to 2f show different embodiments of impulse trains in accordance with the present invention;
Figs. 3a and 3b illustrate an embodiment with a long discharge impulse in accordance with a first group and a short discharge impulse in accordance with a second group, wherein the impulses have an increasing slope section;
Fig. 4 shows another embodiment of an impulse with different initial current, final current and path;
Fig. 5a shows a graph depicting frontal wear values against impulse duration for different impulse types (initial current, final current and path for rise of current) for a given surface area, current per impulse and other process parameters;
Fig. 5b shows a graph depicting lateral wear values against impulse duration for different impulse types (initial current, final current and path for rise of current) for a given surface area, current per impulse and other process parameters;
Figs. 6a to 6c show different sequences of a long discharge impulse belonging to a first group and short discharge impulses belonging to a second group for forming impulse trains in accordance with the present invention;
Fig. 7 shows a sequence of two successive impulse trains in accordance with the present invention; and
Figs. 8a and Bb show an embodiment in which the ratio of long discharge impulses and short discharge impulses is kept constant.

### Detailed Description of Embodiments

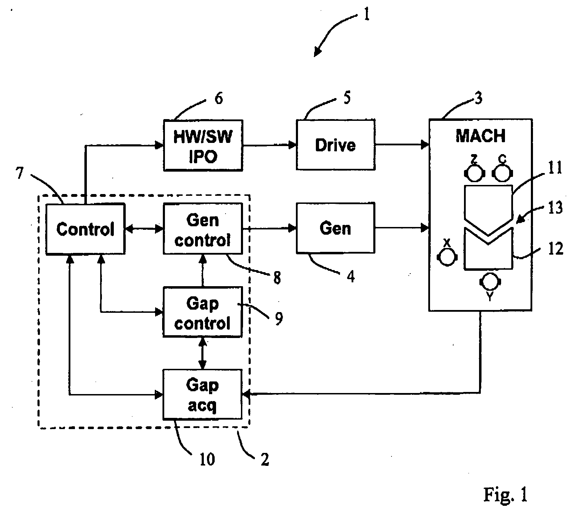

Fig. 1 illustrates an embodiment of a die-sinking electric discharge machining apparatus 1 in accordance with the present invention. Before proceeding further with the detailed description of Fig. 1, however, a few general items will be discussed.

As already mentioned in the beginning, in electrical discharge machining, electric energy is applied in the form of discrete electrical impulses across a machining gap filled with a machining fluid or liquid dielectric (e.g. oil). The discrete electrical impulses cause a succession of electrical discharges between a tool electrode and a workpiece. The narrow space between the tool electrode and the workpiece defines the machining gap or working gap. The electrical discharges lead to a material removal from the workpiece and, additionally, to wear of the tool electrode.

Typically, as material removal proceeds the tool electrode is advanced relatively to the workpiece by servo feed means. The machining gap distance is continuously controlled according to the instantaneous process conditions. A signal representing the current working gap distance (e.g. the ignition delay and/or mean voltage) is compared with a value representing a desired working gap distance (reference value) and the resulting error between these values is computed to generate a new command value for the drive motor. In this way the control of the relative position of workpiece and electrode allows the creation of consecutive material-removal discharges.

The material-removal and the discharges lead to a contamination of the machining gap region with erosion debris, process by-products, thermal decomposition products of the dielectric and gases. It is known to remove such contaminations by flushing the machining gap region with fresh machining fluid and by cyclically retracting the tool electrode away from the workpiece.

From US 4,288,675, mentioned in the outset, it is known to use (discharge) impulse trains which each consist of multiple machining impulses and to vary the duration and/or the off-time of consecutive impulse trains to reduce electrodes wear. The impulse duration of each single impulse and the off-time between each single impulse of the impulse train are preset before machining and depend, e.g. from the electrode materials. The duration or on-time of an impulse train and/or the off-time between consecutive impulse trains is adjusted during machining in accordance with a detected rate of relative advance movement of the tool electrode so as to maintain the current density along machining surfaces substantially constant in spite of change in the machining area during relative advance movement of the tool electrode:

Also, from US 4,603,309 it is known to use increased current pulses intermittently in an impulse train in order to achieve desired current density and increase process stability.

As discussed, typically the tool electrode is prone to wear. Already from US 3,558,842 and the family member CH 466 452 it is known that a protective film forms on the tool electrode under specific conditions in an electric discharge machining process. The protective film is formed, e.g. by products of the working liquid and/or by products resulting from the discharge across the machining gap. US 3,558,842 describes to periodically repeat at least three impulses of voltage and current characterised by certain duration, amplitude and form of voltage including its sequence to cause high material removal on the workpiece and to form the protective film on the tool electrode surface. The three types of impulses, namely igniting, thermal and protective type, are united in one impulse, which is the main drawback of this method, in particular for meso-micro scale machining. The reasons are that the highest material removal rate per pulse is achieved for short pulses with time duration about 20-40 µs (depending on other technology parameters) and also that the specified technique is not compatible for lower currents required for small dimensions of meso-micro scale machining. Another drawback is the so-called wear budgeting where different impulses packed within a single impulse are difficult to monitor with process control to achieve low or zero tool wear. Moreover, displacement of the discharge channel causes form distortion.

In contrast to this document, the inventor recognized that higher form accuracy can be achieved by selecting such a technology that wear neutral impulse trains are located in a single region, thereby keeping the original form of the tool electrode intact.

Also in electric discharge physics carbon deposition on electrode surfaces has been observed, especially for a temperature reaching above 1400°C when pyrolysis of carbon begins. Depending on the temperature and pressure carbon builds up from decomposition products through pyrolysis.

The formation of a protective film can be used to protect the tool electrode and to thereby reduce wear of it, as disclosed in the above mentioned article "Zero wear - The "Perpetuum Mobile" of die-sinking EDM". As discussed in the outset, during the electrical discharge, carbon is formed in form of graphite on the electrode surface(s). The formed graphite type depends on the temperatures involved in the process and current control during electrical discharges. The deposited carbon on the electrode surface (anode and/or cathode) may also contain erosion products or debris formed during and at the end of the discharge. Thereby a layer is formed on the electrode from graphite and erosion products including dielectric decomposition products which protect the original electrode. The EDM process is such controlled that the growth of the layer on the electrode and the wear caused by discharge impulses taking place on the protective layer is in balance. Thus, the wear of the electrode can be reduced.

In this known method impulse trains may be used, which consist of, for example, three identical discharge impulses having the same impulse duration and the same off-time between them. The off-time between the impulse trains according to this method is larger than the off-time between the single discharge impulses of a single impulse train.

Moreover, with this method it is not possible to apply a high discharge current, e.g. above 8 A, for composite electrodes (electrode having multiple different structures, e.g. in the meso- and micro-scale), without causing a high wear on the tool electrode. Hence, with the above methods, the overall machining rate is small.

Here, the process can be seen at multiscale:
- at micro second level: - plasma reaction kinetics,
- at single spark level: - change in temperature and pressure over time duration after breakdown,
- at multiple sparks level: - average current density (duty factor) and impulse train formation,
- at hundreds of milliseconds: level -time interval between two flushing cycles, and
- at much larger time level: - depth of erosion and contamination in the gap region.

In some embodiments, the growth of carbon on the tool electrode can be mainly characterized as lateral growth and frontal growth in dependence on the direction of motion of the tool electrode during erosion. By controlling the current applied to the electrical discharge over the machining gap (also referred to as "spark") during initial few microseconds (1-30 µs) of the spark, a high initial temperature on the electrode surfaces can be reduced whereas rest of the pulse duration increases the surface temperatures of the electrode which lead to carbon formation on the tool electrode surface(s).

As mentioned earlier, at temperatures above 1400°C pyrolysis of carbon begins which may be a primary factor for the formation of the protection layer containing graphite and erosion products on electrodes surface(s). The formed layer may be porous or it can be even harder than the base material of the tool electrode, thereby protecting it against thermal and/or abrasive forces typically causing wear of the tool electrode. In some embodiments the average temperature of the tool electrode surface and the discharge region is controlled by controlling a duty factor or an average current density, whereby the volume of the carbon build-up on the graphite electrode can be controlled.

In some embodiments, the current level per spark can be regulated with three main parameters: Initial current (0.01-25 A), final current (0.1-120 A) and the path between them i.e. different slopes or gradients in current rise. Thus, the rate at which the carbon builds up is based on all these effects including anode/cathode material properties such as specific heat, thermal conductivity and electrical resistivity. In some embodiments, the profile of the current rise per spark, the current slopes and the initial current can reduce wear of the tool electrode and can increase the radial growth of the carbon protection layer on the tool electrode surface. Also, the geometric scale effect of electrode dimension plays a role in the carbon growth rate and the characteristics of the carbon build up.

Although, only the thermal aspect is mentioned here, in some embodiments, the nature of carbon growth may also be attributed to other aspects such as electro-magnetic field, physical - chemical vapour deposition, cathode/anode spot generation, high current density (0.1-20A or higher) over time and/or surface area, etc.

However, in some embodiments, in particular in the meso- and micro-machining, i.e. for example in the meso-scale (instantaneous electrode surface area 10 mm² to 1 mm²) and in the micro-scale (instantaneous electrode surface area between 1 mm² to 0.010 mm² or smaller or smallest dimension structures at the tool electrode which are below 1 mm), the electrode wear is also with the above-mentioned machining processes considerable.

The inventor recognized that, in particular in the above-defined meso- and micro-machining scale, the wear of the tool electrode can be considerably reduced, whereas material removal rate and process stability can be increased, by introducing at least two types of discharge impulses. A first type discharge impulse is configured for forming a protective layer on the tool electrode and a second type discharge impulse is configured for causing wear/erosion on the tool electrode and the workpiece, respectively. By applying a defined ratio of first and second type discharge impulses for material removal from the workpiece, the wear of the tool electrode can be controlled. Moreover, the first and second type discharge impulse can form a specific impulse train, where for each Impulse train the wear is nearly zero. Also the impulse train comprises a predefined ratio of first type and second type discharge impulses.

The first type discharge impulse has a longer impulse duration than the second type discharge impulse. The sequence and combination of the two different types of impulses may be set or generated in any order, also within an impulse train. An impulse train can be defined as a group of discharge impulses, wherein each group, i.e. each impulse train, is separated by a pause time from the previous and consecutive group of discharge impulses (impulse train) or an impulse train can also be defined by a specific pattern of discharge impulses during machining.

The first type discharge impulse primarily causes the formation of a protective film against wear on the tool electrode radially and/or frontally on the tool electrode. The second type discharge impulse causes erosion on the tool electrode surface(s). Mainly depending on the parameters such as current, duty factor, electrode dimension, anode - cathode material properties and dielectric; short pulse duration may also result in higher material removal rate (MRR), higher electrode wear while keeping process stable. In some embodiments, an impulse train may be separated from a consecutive impulse train by a pause duration which is longer than any one of the pause duration values used between same or different types of impulses within the impulse train.

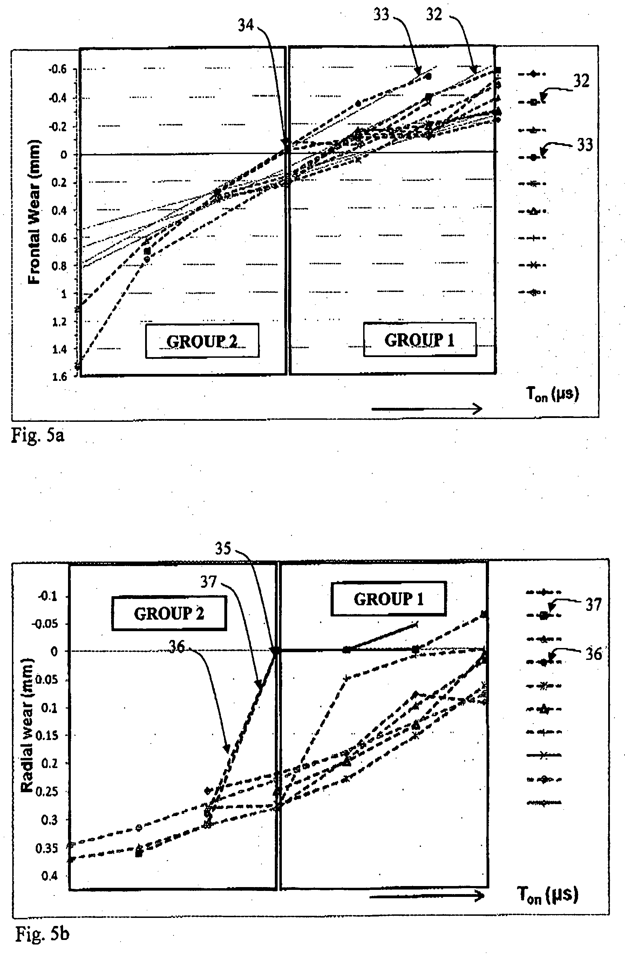

In some embodiments, the least two discharge types can belong to a first and a second group, respectively (e.g. group 1 and group 2 as shown in Figs. 5a and 5b).

From Fig. 5a, it can be seen that for a particular type of discharge (with defined initial current, final current, path for rise of current) with increasing pulse duration, a frontal carbon growth on the tool electrode Increases and at a certain discharge duration value (marked with reference sign 34 in Fig. 5a) crosses from wear situation on tool electrode to zero wear and further to frontal carbon build-up on the electrode.

Thus, two discharge type groups can be formed:
- A first group (group 1), representing first type discharges, comprising a lowest impulse duration value being a value where the frontal wear of the tool electrode reaches zero and comprising any impulse duration values being larger than this value; and
- a second group (group 2), representing second type discharges, comprising impulse duration values being smaller than the impulse duration value at which the frontal wear reaches a zero value.

At the same time, i.e. the same impulse duration value at which the frontal wear reaches a zero value, the same type of discharge with increasing pulse duration reaches a value where the lateral wear of the tool electrode becomes zero (marked with reference sign 35 in Fig. 5b). A further increase in pulse duration leads to further radial carbon growth as shown in fig. 5b.

In some embodiments, it is possible that at the pulse duration value for a specified current impulse, the frontal wear on the tool electrode reaches zero but lateral wear has not reached zero yet Thus, in some embodiments, also two groups can be defined on the basis of lateral wear values, where with increasing pulse duration, a pulse duration value is reached where lateral wear becomes zero or near to zero (35):
- The value of pulse duration at which lateral wear becomes zero or minimum (35) and any pulse duration value being larger than this value belongs to a first group (group 1) representing first type discharge impulses; and
- Any impulse duration value being smaller than the zero or minimum lateral wear pulse duration value belongs to a second group (group 2) representing second type discharge impulses.

In some embodiments, based on the two distinct pulse duration groups (group 1,2) defined for a specified impulse type (with given initial current, final current and path for rise of current) based on frontal wear and/or lateral wear, a specific impulse train is formed comprising at least one impulse with an impulse duration from group 1 and at least one impulse with an impulse duration from group 2 and applied to gap between two electrodes (anode, cathode) which results in low or near zero tool wear, high material removal rate and stable process.

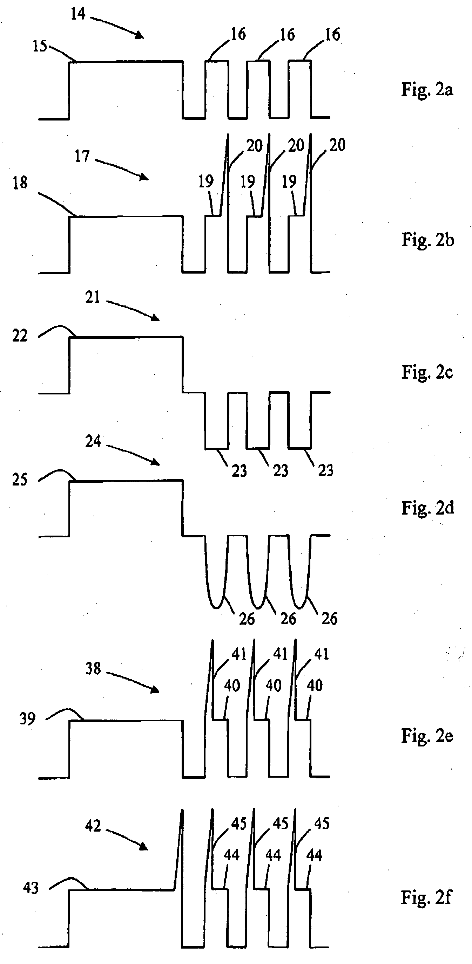

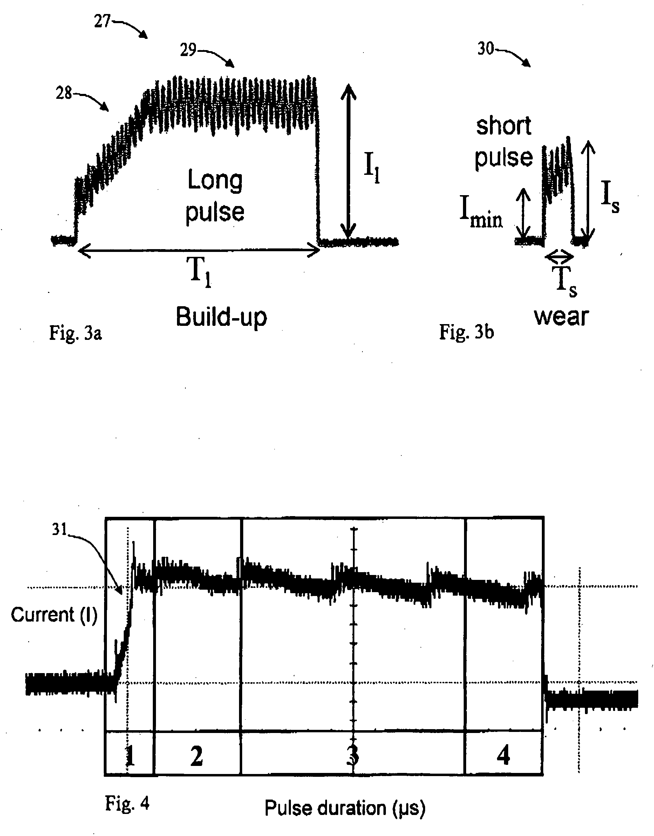

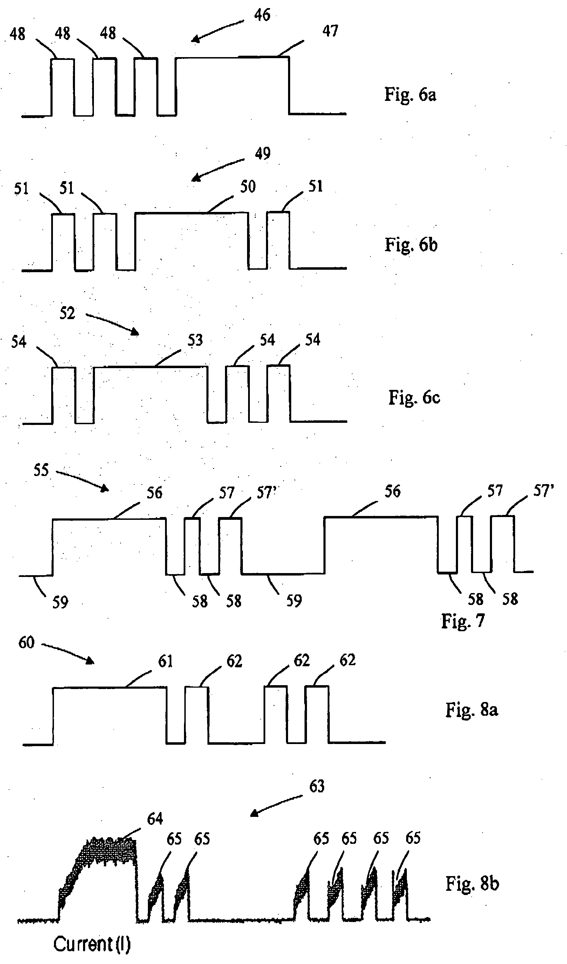

In some embodiments, the impulse train comprises at least two impulses, a first type discharge impulse belonging to group 1 and a second type discharge impulse belonging to group 2 separated by a specific impulse pause duration. In some embodiments, first type discharge impulses (group 1, e.g. fig. 3a) and second type discharge impulses (group 2, e.g. fig. 3b) can be applied in any sequence within an impulse train (see exemplary in Figs. 6a to 6c and 2a).

In some embodiments, the impulse train comprises at least one first type discharge impulse (of group 1) and at least one second type discharge impulse (of group 2). In such embodiments, a pause duration between two consecutive impulse trains is larger than any pause duration used between consecutive pulses within the impulse train (see also Fig. 7).

In some embodiments, for example, in the case of a single or a simple tool electrode geometry, an arc suppression method , which is generally known to the skilled person, is used and modified by introducing a dynamic arc suppression voltage level and adapting it as a dynamic pulse suppression method. In such embodiments the stated pulse train pause condition is no more valid. Thus, in some embodiments, the amount of second type discharges (group 2 discharges) with respect to first type discharges (group 1 dischargers) is determined and a constant ratio between first and second type discharges is maintained (within a given tolerance). In such embodiments, the at least two types of discharge impulses with different properties may be generated based on various algorithms or adaptive process control with voltage/current characteristics and other impulse characteristics, e.g. delay time, open voltage, fall time from open voltage to discharge voltage, high-frequency component of the discharge voltage, etc. Hence, e.g. based on a regulation of an arc suppression level, two or more types of discharge impulses (group 1, 2) can be generated during the erosion. In such embodiments, the protection layer build-up and the wear process can be performed on multi spark level without creating explicit impulse trains (see also Figs. 8a, 8b and the associated description below). Thus, such a dynamic impulse suppression for achieving low wear for meso-micro scale machining falls also under the scope the present invention.

The specific parameters of the first type (group 1) and second type (group 2) discharge impulses, e.g. of the impulse train, such as initial current, final current, path of current rise between Initial and final current, pulse duration(s), pause duration(s) within the impulse train and number of first type (group 1) discharge impulses and second type (group 2) discharge impulses including their sequence within an impulse train depends in some embodiments on fixed parameters, e.g., the surface structure and/or dimensions of the tool electrode, the electrode material, the machining liquid, gap condition, depth of erosion etc.

Accordingly, some embodiments pertain to a method of controlling an electric discharge machining (EDM) apparatus, in particular a die-sinking EDM apparatus or drilling EDM apparatus or milling EDM apparatus. The EDM apparatus has at least a tool electrode and a workpiece and, e.g. other units or elements, which are known to the skilled person, such as a generator, a control, a working table, etc.

The tool electrode is relatively positioned to the workpiece, such that a machining gap is defined between the tool electrode and the workpiece.

The tool electrode can have different shapes, such as known to the skilled person. For instance, the tool electrode can be a single electrode, a batch electrode which has multiple identical structures, a composite electrode which has multiple different structures or a special electrode which can have any shape.

In some embodiments, the tool electrode has at least one portion which has an instantaneous surface area/dimension in the meso- or micro-scale region as defined above.

At next at least one first type discharge impulse and at least one second type discharge impulse are generated, e.g. by the generator of the EDM apparatus. The at least one first type discharge impulse has a longer impulse duration than the impulse duration of the at least one second type discharge impulse and the first type discharge impulse causes the formation of a protective film against wear on the tool electrode and the second type discharge impulse causes erosion at least on the tool electrode. As discussed above, the first type discharge impulse belongs in some embodiments to the first group and the second type discharge impulse to the second group.

Although the function of the first type discharge impulse is to cause a formation of a protective layer on the tool electrode, which can be grown laterally and/or radially on the tool electrode, as also discussed above, the first type discharge impulse could also cause in addition other effects than the formation of the protection layer (such as material removal from workpiece) . The same is true for the second type discharge impulse, which can also cause other effects than only causing wear on the tool electrode and/or material removal on the workpiece (such as process stability).

The first and second type discharge impulses are applied to the tool electrode for material removal from the workpiece. The ratio between the first and second type discharge impulses applied to the tool electrode is defined such that a predefined wear of the tool electrode is caused.

In some embodiments, a plurality of first and second type discharge impulses is applied to the tool electrode. Thus, the ratio between first type and second type discharge impulses is calculated by the number of first type and second type discharge impulses, respectively.

By defining a specific ratio of first and second type discharge impulses a predefined balance between build-up of the protection layer on the tool electrode and the amount of wear of the tool electrode can be achieved, thereby .controlling the wear of the tool electrode.

In some embodiments, the sequence of first and second type discharge impulses can be in any order. In other embodiments, the first and second type discharge impulses are arranged In a predefined order, e.g. one first type discharge impulse is followed by at least one second type discharge impulse, wherein the first and second type discharge impulses are separated by a process pause from each other.

In some embodiments, the first and second type discharge impulses are grouped in a specific discharge impulse pattern, for example, into an impulse train, as also mentioned above. In such embodiments, the EDM generator generates at least one impulse train including at least one first type discharge impulse and at least one second type discharge impulse. The second type discharge impulse(s) are generated in any sequence to the first type discharge impulse e.g. the one single first type discharge impulse comes first in the impulse train and at least one second type (group 2) discharge impulse(s) follow after the first type discharge impulse (as also shown in Figs. 2a to 2f). In other embodiments impulse sequences within an impulse train comprise one single first type discharge impulse (group 1) after at least one or more second type (group 2) discharge impulses (as shown exemplary in Fig. 6a), or one single first type discharge Impulse (group 1) being interposed between two or more second type (group 2) discharge impulses (as shown in Figs. 6b to 6c).

The at least one impulse train is applied to the tool electrode for material removal. In some embodiments, a plurality of impulse trains Is generated and applied to the tool electrode for material removal.

As discussed, the first type discharge impulse (belonging to group 1) primarily causes the generation or formation of a protective film or protective layer against wear on the tool electrode. The protective film can be formed, as discussed above in connection with US 3,558,842, by reaction particles of the machining fluid and/or of the tool electrode and/or of the workpiece, e.g. by pyrolysis. In some embodiments, the tool electrode protective film comprises graphite or graphite embedded with erosion products. In such embodiments, the first type discharge impulse (group 1) is adapted to form or generate a pyrolytic graphite layer on the tool electrode which may have higher degree of hardness compared to the base electrode material. In some embodiments, the protective layer is formed In particular in a front region of the tool electrode, e.g. by frontal growth, where most of the discharges take place.

The second type discharge impulse (belonging to group 2) causes erosion at least on the tool electrode and, additionally, on the workpiece. As the tool electrode is mainly protected by the protection film produced by the single first type discharge (group 1) impulse, the tool electrode itself is not wom or marginally worn, while mostly the protective layer which has been formed on it is worn out.

As mentioned, the single first type discharge impulse (group 1), e.g. of each impulse train, has longer impulse duration than the second type discharge impulse (group 2). The particular impulse duration values at which first type and second type discharge impulses (i.e. group 1 and group 2 discharge impulse) can be separated depends on the impulse type/characteristic (initial current, final current, path for rise of current) and associated process parameters (e.g. electrode surface area, dielectric oil, workpiece material, electrode material, pause duration between two consecutive impulse trains, etc.). For a given impulse type having specific characteristics (see also fig. 5a, line 32; 5b, line 37; line with squares) and process conditions, an example for the definition of impulse durations for group 1 and group 2 discharge impulse can be found in Fig. 5a, based on frontal wear of tool electrode, and/or Fig. 5b, based on lateral wear of the tool electrode, as already discussed in more detail above.

In some embodiments, a first group (group 1) of time durations embracing the first type discharge impulses and a second group (group 2) of time durations embracing the second type discharge impulses are each defined, e.g. based on the characteristics discussed above. The time duration of the discharge impulses of the first and/or second group are determined by at least one of the following process parameters: electrode surface area, pulse type (initial current, final current, path), electrode-workpiece materials, pause duration between consecutive impulse trains, dielectric oil, gap between tool electrode and workpiece, time interval between two flushing cycles, machining depth, discharge voltage and/or curent. In some embodiments, at least some of these parameters are taken into account in order to specify the first and and/or second type discharge impulse.

In some embodiments, the time duration of the second type discharge impulse is chosen from the second group of discharge impulses and the time duration of the first type discharge impulse is chosen from the first group of discharge impulses.

In some embodiments, the first and/or second type discharge impulse is specified at least by an Initial current value, a final current, and a path taken for a rise of current, thereby also the specific curve of the impulse is defined. In some embodiments, pulse type of impulses within an Impulse train may be different. E.g. pulse type for impulses belonging to group 1 and group 2 may be different where group 1 impulse may have increasing slope current for faster carbon growth and group 2 impulses may have rectangular current shape for higher material removal from tool electrode and/or workpiece.

In some embodiments, within one impulse train the protective film against wear on the tool electrode generated by the first type discharge impulse is nearly completely eroded by the second type discharge impulses of the impulse train.

The impulse train with the first and second type discharge impulses is applied to the tool electrode such that a corresponding discharge takes place across the machining gap between the tool electrode and the workpiece. Thus, in embodiments, where the protective layer produced within one impulse train is eroded within one impulse train, the tool electrode has (nearly) the original shape after application of each impulse train. In other words, in some embodiments, the Impulse train is wear neutral due to combination of group 1 and 2 impulses, while mostly achieving even higher material removal rate and process stability due to group 2 impulse(s).

Due to this shape accuracy characteristic in some embodiments, also structures in the defined domain of meso and micro scale can be machined with high accuracy and form precision with even lesser number of required electrodes for machining leading to higher productivity, lower resource requirements and thus overall cost saving for any type of machining (complex features, combination electrodes including high aspect ratios up to 3:1 and above) in macro-meso-micro scale for numerous engineering materials (e.g. Steel, Stainless Steel, Nickel alloys, Titanium alloys, Aluminium, Ceramics, Silicon, etc.).

In some embodiments, the time duration of the second type discharge impulse is below 30 microseconds. Pulse duration value depends on various parameters such as electrode surface area, gap conditions, applied current per spark, average current, etc. This allows a fast machining of the anode and/or cathode region, in particular in comparison with the known "zero wear" method or single type discharge process technologies described above.

In some embodiments, the discharge current during spark is in the range of 0.1 A to 120 A, and, in particular, above 8 A, and in particular for the second type of discharge impulses (group 2 pulse durations). Such a high discharge current also allows a higher wear on tool electrode and may also result in faster machining process, in particular in comparison with the "zero wear" method described above, since In this described method the wear of the tool electrode is very high, in particular in the case of a high discharge current and small electrode surface area which is below 10 mm² or smallest electrode dimension below 1 mm (e.g. Ribs).

In some embodiments, the first type and/or the second type discharge impulse has a square shape, an increasing slope section and/or a falling slope section with main parameters: initial current, final current and path used for current rise/fall between these two points. In some embodiments, an increasing slope section, in particular an increasing edge has the effect that the discharge impulse starts with a lower current and increase over impulse duration. This allows using a higher peak current and/or current density for a discharge impulse in some embodiments for given surface area of electrode and may also facilitate faster carbon growth on tool electrode. Similarly, the falling slope section, in particular a falling edge, has the effect that a higher peak current of a discharge impulse is only present for a short time. Thus, such impulse shapes allow the application of a higher peak discharge current.

In some embodiments, the second type discharge impulse (fig. 2b, 2e) and/or the first type discharge impulse (fig. 2f) comprises a peak section in which, for example, the discharge impulse has a significantly higher current/voltage than the remaining discharge impulse. In some embodiments, such peak sections improve the machining rate and/or the removal of the protective layer or base electrode material on the tool electrode.

In some embodiments, the first type discharge impulse(s) and the second type discharge impulse(s) have positive polarity, while in other embodiments the first type discharge impulse has a positive polarity and the second type discharge impulse(s) have a negative polarity. The negative polarity can increase the removal of the protective layer from the tool electrode.

The second type discharge impulses can also be generated by a capacitive discharging (see Fig. 2d).

As mentioned, some embodiments pertain to machining in the meso-scale and/or micro-scale or even smaller surface area (nano scale). In such embodiments, the tool electrode has at least one section or surface area or smallest dimension structure which is smaller than 10 mm², respectively 1mm, in some embodiments even smaller than 0.010 mm².

In some embodiments, an off-time between two consecutive impulse trains is larger than the pause duration(s) used between different pulses within a single impulse train. The inventor has recognized that in some embodiments the overall machining rate can be improved by introducing longer pauses or off-times (>200 µs) between consecutive impulse trains, since the longer pauses can allow a better recovery of the machining gap, and primarily depends on pulse type (initial current, final current, path for rise of current) and process parameters (such as electrode surface area, time interval between two flushing cycles, dielectric oil, workpiece and electrode materials):

In some embodiments such as single electrodes in meso-micro scale, single impulse trains can be replaced by algorithms which maintain a specific ratio of pulses belonging to group 1, (longer pulse duration), with pulses belonging to group 2 (shorter pulse duration), as discussed above. The generation of two distinct discharge types can be done with preset programming or dynamically through adaptive current control algorithms e.g. using arc suppression level.

In some embodiments, the ratio of first and second type discharge impulses is controlled at a desired value, e.g. maintained constant, in order to provide a predefined amount of wear of the tool electrode.

Some embodiments pertain to an electric discharge machining apparatus, in particular a die-sinking EDM apparatus or drilling EDM apparatus, which Is adapted to perform at least some steps of the control method as described above.

Such an EDM apparatus comprises parts which are typically known to the skilled person, such as a tool electrode, a working table for receiving a workpiece, an impulse generator for generating discharge impulses, and a control for controlling the EDM apparatus. The control is adapted for performing the method as described above.

Returning to Fig. 1, there is illustrated a die-sinking electric discharge machining (EDM) apparatus 1 in accordance with the present invention. The general structure of a die-sinking EDM apparatus is also known to the skilled person.

The die-sinking EDM apparatus 1 has a control block 2 for performing the EDM process described above. The control block 2 has a general control module 7, a generator control module 8 for controlling an impulse generator 4, a machining gap control module 9 for controlling a machining gap 13 between a tool electrode 11 and a workpiece 12, and a gap acquisition module 10 for receiving machining gap related data during the machining process.

The tool electrode 11 and the workpiece 12 are located in a machining block 3. The positioning of the tool electrode 11 relative to the workpiece 12 is performed over an interpolator module 6 and a . drive module 5 which drives positioning members, such as servo-feeds, in the c, x, y and z-direction as indicated in the machining block 3 of Fig. 1. The tool electrode 11 is made of graphite. In other embodiments, the tool electrode can be made of any other known material suitable for tool electrodes, e.g. copper-graphite, copper, copper-tungsten, etc. The workpiece 12 in this embodiment is made of metal, but, in other embodiments, it can be made of any electrically conductive material, such as metals or conductive ceramics, but also high electric resistance materials.

Figs. 2a to 2f illustrate examples of different impulse trains which can be used in the die-sinking EDM 1 for machining the workpiece 12. The Fig. 2a to 2f visualize the impulse duration of the Impulse train on the x-axis and a discharge current of the.impulse train on the y-axis.

Fig. 2a illustrates an impulse train 14 which has in the first position one first type discharge impulse 18 (group 1) for primarily forming a protective layer on the tool electrode 11, as discussed above, and three consecutive second type discharge impulses 16 (group 2) for eroding the workpiece 12 and the protective layer on the tool electrode 11, as also discussed above. The discharge impulses 15 and 16 here have a rectangular shape, i.e. an initial current is the same as a final current for a single impulse. The discharge current is the same for the discharge impulses 15 and 16 of the impulse train 14.

Moreover, also the off-times between the discharge impulse 15 for forming the protective layer and the first erosion discharge impulse 16 as well as between the single erosion discharge impulse 16 are identical in the present embodiment

Between the application of each impulse train 14 an off-time can be used. During the off-time the machining gap, the tool electrode and the workpiece recover such that in some embodiments the overall machining rate is higher than in embodiments where no or only a short off-time is present between single impulse trains.

As mentioned above, the impulse durations, the off-times between the impulses, the number of the erosion discharge impulses, the discharge current, the off-time between Impulse trains, etc., depend i.e. on the materials used for the tool electrode and the workpiece, gap conditions and the shape of the tool electrode 11, etc. These parameters can be pre-stored and/or pre-set in the die-sinking EDM apparatus 1 for group 1 and group 2 discharge impulses. In other embodiments, these parameters can be dynamically determined, e.g. by analyzing machining parameters, such as variations In the discharge voltage or current characteristics.

In some embodiments, also other impulse trains can be used:
For example, in some embodiments an impulse train 17, as illustrated in Fig. 2b, which is similar to the impulse train 14 of Fig. 2a, has a protective layer forming discharge impulse 18 (group 1) and three erosion discharge impulses 19 (group 2) which each have a peak section 20. The peak sections 20 comprise a peak in the discharge current, which is higher in current than the remaining sections of the erosion discharge impulses 19. In some embodiments, this high peak current enhances the erosion of the tool electrode 11 and/or workpiece 12, and, thus, increases tool wear in some embodiments. In addition the high gradient di/dt promotes the ejection of the molten material from the crater when the plasma channel collapses.

As illustrated in Fig. 2c, in some embodiments an impulse train 21, which is similar to the impulse train 14 of Fig. 2a, has a protective layer discharge impulse 22 (group 1) followed by three erosion discharge impulses 23 (group 2) with negative polarity. The change in the polarity between the first discharge Impulse 22 of the impulse train 21 and the erosion discharge impulses 23 enhances the erosion of the protective layer on the tool electrode 11 and/or erosion on workpiece 12.

As illustrated in Fig. 2d, in some embodiments, an impulse train 24 has a first discharge impulse 25 and three erosion discharge impulses 26 which are generated by a capacitive discharge. The erosion discharge impulses 26 have a negative polarity.

In order to further reduce wear at the tool electrode or achieve faster radial growth of graphite protective layer, in some embodiments and as illustrated in Fig. 3a, a long discharge impulse 27 (group 1), with impulse duration T_{L} for build-up of the protective layer has an increasing edge section 28 and a constant section 29. The increasing edge section 28 starts with a lower initial discharge current and the final discharge current is increased up to the current of the constant current region 29 of the discharge impulse 27. The path taken in this embodiment is linear. However, in other embodiments, various paths can be generated to reach final current from initial discharge current Iₘᵢₙ, e.g. current rise shown in fig. 4.

A short erosion discharge impulse 30 (group 2), as illustrated in Fig. 3b, has an increasing current over the whole impulse duration Tₛ. The current increases from a minimum discharge current Iₘᵢₙ up to a maximum discharge current Iₛ. The short discharge impulse 30 makes wear on the tool electrode 11, as discussed above. The short duration discharge impulse (belonging to group 2) may also result in higher material removal rate.

The above discussed shapes of the long impulse 27 (Fig. 3a) and the short impulse 30 (Fig. 3b) can be applied to any type of impulse trains, and in particular to the impulse trains 14, 17, 21, 24, 38, 42, 46, 49, 52 and 55 as illustrated in Figs. 2a to 2f, Figs. 6a to 6c and Fig. 7 and as discussed above.

As illustrated in Fig. 4, in some embodiments, a current pulse type is so formed that the rise 31 from initial current to final current is optimised to balance high material removal rate and low tool wear. Here, in the first 5-10 µs a low initial current is used for low wear followed by rapid increase in current reaching to final current within few µs to take advantage of high material removal during the first 0-30 µs. Further increase in impulse duration results in higher carbon growth on electrode surface and may cause higher material removal on workpiece surface.

In the following, the differentiation between group 1 and group 2 discharge impulses is exemplary discussed in connection with Figs. 5a and 5b.

As illustrated in Fig. 5a, in some embodiments, depending on current pulse type (here, for example pulse type 32, 33) and given process parameters (such as electrode surface area, current per pulse, pause duration, dielectric oil, material combination, time interval between two flushing cycles, etc.) a specific pulse duration value is reached 34, where frontal tool wear is zero or near zero. All the pulse duration values larger than 34 under these conditions including pulse duration value at 34 are classified as group 1 which primarily cause carbon-product formation on at least tool electrode. All the pulse duration values under these conditions smaller than value at 34, are classified into group 2 which mainly causes tool wear and may also improve material removal rate, process stability. The point 34 value may shift for same conditions but different pulse types shown by lines other than 32, 33 and thus different group 1, 2 value windows. Combining at least one pulse from group 1 and one from group 2 in any sequence an impulse train is formed e.g. 14, 17, 21,24.

As illustrated in Fig. 5b, in some embodiments depending on current pulse type (here, for example pulse type 32, 33) and given process parameters (such as electrode surface area, current per pulse, pause duration, dielectric oil, material combination, time interval between two flushing cycles, etc.) a specific pulse duration value is reached 35, where lateral tool wear is zero or near zero. All the pulse duration values larger than 35 under these conditions including pulse duration value at 35 are classified as group 1 which primarily cause carbon-product formation on at least tool electrode. All the pulse duration values under these conditions smaller than value at 35, are classified into group 2 which mainly causes tool wear and may also improve material removal rate, process stability. For same process conditions, pulse duration 35 value may shift for different pulse types shown by lines other than 37, 36 in fig. 5b and thus different group 1, 2 value windows. Combining at least one pulse from group 1 and one from group 2 in any sequence an impulse train is formed e.g. 14, 17, 21, 24, 38, 42, 46, 49 and 52.

The following discussion of Fig. 6a to 6c and 7 refers to embodiments with impulse trains having different sequences of first and second type discharge impulses.

As illustrated in Fig. 6a to 6c, in some embodiments long pulse duration pulse(s) and short duration pulse(s) can be arranged in any sequence in an impulse train combined with features of 14, 17, 21, 24 or other impulse train formations. Two consecutive impulse trains are usually separated by a pause duration which is larger than any pause duration used between two consecutive impulses within an impulse train.

Fig. 6a illustrates an impulse train 46 having in the three first positions three second type discharge impulses 48 causing erosion followed by a longer first type discharge Impulse 47. In this impulse train 47 the wear caused by the second type discharge impulses 48 is balanced by the first type discharge impulse 47 causing the formation of a protective layer on the tool electrode.

Fig. 6b illustrates an impulse train 49, where on the first two positions two second type discharge impulses 51 are located, followed by a first type discharge impulse 50, which, in turn, is followed by a single second type discharge impulse 51. In this impulse train 49, the first type discharge impulse 50 is interposed between at least two second type discharge impulses 51.

Fig. 6c illustrates an impulse train 52, where on a first position a single second type discharge impulse 54 is located, followed by a single first type discharge impulse .53, which, in turn, is followed by two second type discharge impulses 54.

Fig. 7 illustrates an embodiment, where an impulse train 55 has on the first position a first type discharge impulse 56, followed by a second type discharge impulse 57 and another second type discharge impulse 57' having slightly longer pulse duration than the previous second type discharge impulse 57. The off-time 58 between the first 56 and second 57, 57' type discharge impulses is identical. The off-time 59 between two consecutive impulse trains 55 is larger than the off-time 58 between the single first/second type discharge impulses within one impulse train 55.

As illustrated in Fig. 8a and 8b, in some embodiments, long pulse duration pulse(s), i.e. first type discharge impulses 61 (Fig. 8a) and 64 (Fig. 8b) belonging to group 1, and short duration pulse(s), i.e. second type discharge impulses 62 (Fig. 8a) and 65 (Fig. 8b) belonging to group 2, can be applied to a single electrode without arranging them in an impulse train. In some embodiments, they are arranged, for example, in patterns (60. Fig. 8a, 63, Fig. 8b).

In such embodiments, also the ratio between at least these two different impulse types of group 1 and 2 is maintained constant. The ratio can be pre-programmed or dynamically calculated, using one or more process condition information, e.g. dynamic arc suppression level to achieve low tool wear and/or high material removal rate.

Although the present invention is described in connection with a limited number of embodiments, it is evident that there may be allowed modifications and variants that do not depart from the concept and scope of the invention, which will be readily understood by those skilled in the art. All these modifications and variants are considered not to depart from the concept and scope of the invention, as defined by the appended claims.

## Claims

1. A method of controlling an electric discharge machining apparatus (1) having at least a tool electrode (11) and a workpiece (12), the method comprising the steps of:
- positioning the tool electrode (11) relative to the workpiece (12);
- generating an impulse train (14, 17, 21, 24, 38, 42, 46, 49, 52) at a single region including at least one first type discharge impulse (15, 18, 22, 25, 27, 39, 43, 47, 50, 53) and at least one second type discharge impulse (16, 19, 23, 26, 30, 40, 44, 48, 51, 54), wherein the impulse train including the first and second type discharge impulses is appliedto a gap (13) between the tool electrode (11) and the workpiece (12)
- wherein the at least one first type discharge impulse (15,18,22,25,27 39,43,47,50,53) has a positive polarity
- generating the at least one first type discharge impulse (15, 18, 22, 25, 27, 39, 43, 47, 50, 53) and the at least one second type discharge impulse (16, 19, 23, 26, 30, 40, 44, 48, 51, 54), wherein the at least one first type discharge impulse has a longer impulse duration (T_{L}) than the impulse duration (T_{S}) of the at least one second type discharge impulse, and wherein the first type discharge impulse causes the formation of a protective film against wear on the tool electrode (11) at the single region and the second type discharge impulse causes erosion at least on the tool electrode (11) at the single region
- applying the first and second type discharge impulses to the gap (13) between the tool electrode (11) and the workpiece (12) for material removal from the workpiece (12), wherein a ratio between the first and second type discharge impulses applied to the tool electrode is such defined that a predefined wear of the tool electrode (11) is caused.

2. The method of controlling an electric discharge machining apparatus according to the preceding claim 1, further comprising the steps of:
- defining a first group of discharge impulses (group 1), comprising a lowest impulse duration value being a value where the frontal and/or lateral wear of the tool electrode reaches zero and comprising any impulse duration values being larger than this value; and
- defining a second group of discharge impulses (group 2), comprising impulse duration values being smaller than the impulse duration value at which the frontal and/or lateral wear reaches a zero value.

3. The method of controlling an electric discharge machining apparatus according to any one of the preceding claims, wherein the impulse duration of discharge impulses of first group and second group are further determined by at least one of the following process parameters: electrode surface area, pulse type, maximum current per pulse, pause duration between consecutive impulse trains, gap between tool electrode and workpiece, workpiece material, electrode material, dielectric oil, time interval between two flushing cycles, machining depth.

4. The method of controlling an electric-discharge machining apparatus according to claim 2, wherein the time duration (T_{S}) of the second type discharge impulse (16, 19, 23, 26, 30, 40, 44, 48, 51, 54) is chosen from the second group and wherein the time duration (T_{L}) of the first type discharge impulse (15, 18, 22, 25, 27, 39, 43, 47, 50, 53) is chosen from the first group.

5. The method of controlling an electric discharge machining apparatus according to any one of the preceding claims, wherein the first and/or second type discharge impulse is specified at least by an initial current value (Iₘᵢₙ), a final current (I_{L/S}), and a path taken for a rise of current (31).

6. The method of controlling an electric discharge machining apparatus according to any one of the preceding claims, wherein the maximum discharge current per impulse is in the range between 0.1 A and 120 A.

7. The method of controlling an electric discharge machining apparatus according to any one of the preceding claims, wherein the first type (27) and/or the second type discharge impulse (30) has a square shape and/or an increasing slope section (28) and/or a falling slope section with main parameters: initial current, final current and path used for current rise and/or fall between these two points.

8. The method of controlling an electric discharge machining apparatus according to any one of the preceding claims, wherein at least one of the first (15, 18, 22, 25, 27, 39, 43, 47, 50, 53) and second (16, 19, 30, 40, 44, 48, 51, 54) type discharge impulses comprises a peak section (20).

9. The method of controlling an electric discharge machining apparatus according to any one of the preceding claims, wherein the at least one second type discharge impulse (16, 19, 30, 40, 44, 48, 51, 54) has a positive or negative polarity (23, 26).

10. The method of controlling an electric discharge machining apparatus according to any one of the preceding claims, wherein the at least one second type discharge impulse (26) is generated by capacitive discharging.

11. The method of controlling an electric discharge machining apparatus according to any one of the preceding claims, wherein the tool electrode (11) has at least one section having a structure which is in meso-scale having an instantaneous electrode surface area between 10 mm² - 1 mm² or micro-scale having an instantaneous electrode surface area lower than 1 mm² or having a structure with a dimension below 1 mm.

12. The method of controlling an electric discharge machining apparatus according to any one of claims 1 to 10, wherein within one impulse train (14, 17, 21, 24) the protective film against wear on the tool electrode (11) formed by the first type discharge impulse (15, 18, 22, 25, 27, 39, 43, 47, 50, 53) is nearly completely eroded by the at least one second type discharge impulse (16, 19, 23, 26, 30, 40, 44, 48, 51, 54) of this impulse train (14, 17, 21, 24, 38, 42, 46, 49, 52) such that the wear is zero or near zero.

13. The method of controlling an electric discharge machining apparatus according to any one of the preceding claims, wherein an off-time (59) between two consecutive impulse trains is larger than any pause duration (58) between two consecutive impulses within an impulse train.

14. The method of controlling an electric discharge machining apparatus according to any one of the preceding claims, wherein the ratio of first and second type discharge impulses is maintained constant.

15. An electric discharge machining apparatus comprising:
- a tool electrode (11),
- a working table (3) for receiving a workpiece (12),
- an impulse generator (4) for generating discharge impulses, and
- a control (2) for controlling the electric discharge machining apparatus (1),
wherein the control (2) performs the method of any one of the preceding claims.

16. The electric discharge machining apparatus of claim 15, wherein the apparatus is a die-sinking electric discharge machining apparatus or a drilling electric discharge machining apparatus or a milling electric discharge machining apparatus.

## Patentansprüche

1. Verfahren zum Steuern einer Vorrichtung (1) zum Funkenerodieren, die mindestens eine Werkzeugelektrode (11) und ein Werkstück (12) aufweist, wobei das Verfahren die folgenden Schritte aufweist:
- Positionieren der Werkzeugelektrode (11) in Bezug zu dem Werkstück (12);
- Erzeugen einer Impulsfolge (14, 17, 21, 24, 38, 42, 46, 49, 52) an einem einzelnen Bereich, die mindestens einen Entladeimpuls von einem ersten Typ (15, 18, 22, 25, 27, 39, 43, 47, 50, 53) und mindestens einen Entladeimpuls von einem zweiten Typ (16, 19, 23, 26, 30, 40, 44, 48, 51, 54) aufweist, wobei die Impulsfolge, die die Entladeimpulse vom ersten und vom zweiten Typ aufweist, auf einen Abstand (13) zwischen der Werkzeugelektrode (11) und dem Werkstück (12) angewandt wird;
- wobei der mindestens eine Entladeimpuls von dem ersten Typ (15, 18, 22, 25, 27, 39, 43, 47, 50, 53) eine positive Polarität aufweist
- Erzeugen des mindestens einen Entladeimpulses von dem ersten Typ (15, 18, 22, 25, 27, 39, 43, 47, 50, 53) und des mindestens einen Entladeimpulses von dem zweiten Typ (16, 19, 23, 26, 30, 40, 44, 48, 51, 54), wobei der mindestens eine Entladeimpuls von dem ersten Typ eine längere Impulsdauer (T_{L}) aufweist als die Impulsdauer (T_{S}) des mindestens einen Entladeimpulses von dem zweiten Typ und wobei der Entladeimpuls von dem ersten Typ die Bildung einer dünnen Schutzschicht gegen Verschleiß auf der Werkzeugelektrode (11) an dem einzelnen Bereich bewirkt und der Entladeimpuls von dem zweiten Typ die Erosion mindestens auf der Werkzeugelektrode (11) an dem einzelnen Bereich bewirkt
- Anwenden der Entladeimpulse von dem ersten und dem zweiten Typ auf den Abstand (13) zwischen der Werkzeugelektrode (11) und dem Werkstück (12) zur Materialentfernung von dem Werkstück (12), wobei ein Verhältnis zwischen den Entladeimpulsen von dem ersten und dem zweiten Typ, die auf die Werkzeugelektrode angewandt werden, derart definiert ist, dass ein vordefinierter Verschleiß der Werkzeugelektrode (11) bewirkt wird.

2. Verfahren zum Steuern einer Vorrichtung zum Funkenerodieren nach Anspruch 1, das ferner die Folgenden Schritte aufweist:
- Definieren einer ersten Gruppe von Endladeimpulsen (Gruppe 1), die einen niedrigsten Impulsdauerwert aufweisen, der ein Wert ist, an dem der vordere und/oder seitliche Verschleiß der Werkzeugelektrode Null erreicht und jegliche Impulsdauerwerte aufweist, die größer als dieser Wert sind; und
- Definieren einer zweiten Gruppe von Entladeimpulsen (Gruppe 2), die Impulsdauerwerte aufweisen, die kleiner sind als der Impulsdauerwert, an dem der vordere und/oder seitliche Verschleiß einen Nullwert erreicht.

3. Verfahren zum Steuern einer Vorrichtung zum Funkenerodieren nach einem der vorhergehenden Ansprüche, wobei die Impulsdauer von Entladeimpulsen der ersten Gruppe und zweiten Gruppe ferner durch mindestens einen der folgenden Prozessparameter bestimmt werden: Elektrodenoberfläche, Impulstyp, maximaler Strom pro Impuls, Dauer der Pause zwischen aufeinanderfolgenden Impulsfolgen, Abstand zwischen Werkzeugelektrode und Werkstück, Werkstückmaterial, Elektrodenmaterial, dielektrisches Öl, Zeitintervall zwischen zwei Spülzyklen, Bearbeitungstiefe.

4. Verfahren zum Steuern einer Vorrichtung zum Funkenerodieren nach Anspruch 2, wobei die Zeitdauer (T_{S}) des Entladeimpulses von dem zweiten Typ (16, 19, 23, 26, 30, 40, 44, 48, 51, 54) von der zweiten Gruppe ausgewählt wird und wobei die Zeitdauer (T_{L}) des Entladeimpulses von dem ersten Typ (15, 18, 22, 25, 27, 39, 43, 47, 50, 53) von der ersten Gruppe ausgewählt wird.

5. Verfahren zum Steuern einer Vorrichtung zum Funkenerodieren nach einem der vorhergehenden Ansprüche, wobei der Entladeimpuls von dem ersten und/oder zweiten Typ mindestens durch einen Ausgangsstromwert (Iₘᵢₙ), einen Endstrom (I_{L/S}) und einen für einen Anstieg des Stroms (31) genommenen Weg angegeben wird.

6. Verfahren zum Steuern einer Vorrichtung zum Funkenerodieren nach einem der vorhergehenden Ansprüche, wobei der maximale Entladestrom pro Impuls im Bereich zwischen 0,1 A und 120 A liegt.

7. Verfahren zum Steuern einer Vorrichtung zum Funkenerodieren nach einem der vorhergehenden Ansprüche, wobei der Entladeimpuls von dem ersten Typ (27) und/oder von dem zweiten Typ (30) eine quadratische Form und/oder einen Abschnitt mit zunehmender Steigung (28) und/oder einen Abschnitt mit fallender Steigung mit den folgenden Hauptparametern aufweist: Ausgangsstrom, Endstrom und Weg, der für den Stromanstieg und/oder-abfall zwischen diesen zwei Punkten genommen wurde.

8. Verfahren zum Steuern einer Vorrichtung zum Funkenerodieren nach einem der vorhergehenden Ansprüche, wobei mindestens einer von den Entladeimpulsen von dem ersten Typ (15, 18, 22, 25, 27, 39, 43, 47, 50, 53) und dem zweiten Typ (16, 19, 30, 40, 44, 48, 51, 54) einen Spitzenabschnitt (20) aufweist.

9. Verfahren zum Steuern einer Vorrichtung zum Funkenerodieren nach einem der vorhergehenden Ansprüche, wobei der mindestens eine Entladeimpuls von dem zweiten Typ (16, 19, 30, 40, 44, 48, 51, 54) eine positive oder negative Polarität (23, 26) aufweist.

10. Verfahren zum Steuern einer Vorrichtung zum Funkenerodieren nach einem der vorhergehenden Ansprüche, wobei der mindestens eine Entladeimpuls (26) von dem zweiten Typ durch kapazitive Entladung erzeugt wird.

11. Verfahren zum Steuern einer Vorrichtung zum Funkenerodieren nach einem der vorhergehenden Ansprüche, wobei die Werkzeugelektrode (11) mindestens einen Abschnitt aufweist, der eine Struktur aufweist, die sich in der Mesoskala mit einer momentanen Elektrodenoberfläche zwischen 10 mm² und 1 mm² oder in der Mikroskala mit einer momentanen Elektrodenoberfläche von weniger als 1 mm² befindet oder eine Struktur mit einer Abmessung unter 1 mm aufweist.

12. Verfahren zum Steuern einer Vorrichtung zum Funkenerodieren nach einem der Ansprüche 1 bis 10, wobei innerhalb einer Impulsfolge (14, 17, 21, 24) die Schutzschicht gegen Verschleiß auf der Werkzeugelektrode (11), die durch den Entladeimpuls von dem ersten Typ (15, 18, 22, 25, 27, 39, 43, 47, 50, 53) gebildet wird, nahezu vollständig durch den mindestens einen Entladeimpuls von dem zweiten Typ (16, 19, 23, 26, 30, 40, 44, 48, 51, 54) von dieser Impulsfolge (14, 17, 21, 24, 38, 42, 46, 49, 52) erodiert wird, derart, dass der Verschleiß Null oder nahezu Null beträgt.

13. Verfahren zum Steuern einer Vorrichtung zum Funkenerodieren nach einem der vorhergehenden Ansprüche, wobei eine Auszeit (59) zwischen zwei aufeinanderfolgenden Impulsfolgen größer ist als eine Pausendauer (58) zwischen zwei aufeinanderfolgenden Impulsen innerhalb einer Impulsfolge.

14. Verfahren zum Steuern einer Vorrichtung zum Funkenerodieren nach einem der vorhergehenden Ansprüche, wobei das Verhältnis zwischen den Entladeimpulsen von dem ersten und dem zweiten Typ konstant gehalten wird.

15. Vorrichtung zum Funkenerodieren, die Folgendes aufweist:
- eine Werkzeugelektrode (11),
- einen Arbeitstisch (3) zum Aufnehmen eines Werkstücks (12),
- einen Impulsgenerator (4) zum Erzeugen von Entladeimpulsen, und
- eine Steuerung (2) zum Steuern der Vorrichtung (1) zum Funkenerodieren,
wobei die Steuerung (2) das Verfahren nach einem der vorhergehenden Ansprüche durchführt.

16. Vorrichtung zum Funkenerodieren nach Anspruch 15, wobei die Vorrichtung eine Vorrichtung zum Funkenerodieren zum Gesenkfräsen oder eine Vorrichtung zum Funkenerodieren zum Bohren oder eine Vorrichtung zum Funkenerodieren zum Fräsen ist.

## Revendications

1. Procédé de commande d'un appareil d'usinage par électroérosion (1) comprenant au moins une électrode outil (11) et une pièce à usiner (12), le procédé comprenant les étapes suivantes :
positionner l'électrode outil (11) par rapport à la pièce à usiner (12) ;
générer au moins un train d'impulsions (14, 17, 21, 24, 38, 42, 46, 49, 52) au niveau d'une région unique comprenant au moins une impulsion de décharge de premier type (15, 18, 22, 25, 27, 39, 43, 47, 50, 53) et au moins une impulsion de décharge du second type (16, 19, 23, 26, 30, 40, 44, 48, 51, 54), où le train d'impulsions comprenant les impulsions de décharge des premier et second types est appliqué à un écart (13) entre l'électrode outil (11) et la pièce à usiner (12) ;
où l'au moins une impulsion de décharge de premier type (15, 18, 22, 25, 27, 39, 43, 47, 50, 53) a une polarité positive ;
générer l'au moins une impulsion de décharge de premier type (15, 18, 22, 25, 27, 39, 43, 47, 50, 53) et l'au moins une impulsion de décharge du second type (16, 19, 23, 26, 30, 40, 44, 48, 51, 54), où l'au moins une impulsion de décharge de premier type a une durée d'impulsion plus longue (T_{L}) que la durée d'impulsion (T_{S}) de l'au moins une impulsion de décharge du second type, et où l'impulsion de décharge de premier type entraîne la formation d'un film protecteur contre l'usure de l'électrode outil (11) au niveau de la région unique et l'impulsion de décharge du second type provoque une érosion au moins sur l'électrode outil (11) au niveau de la région unique ;
appliquer les impulsions de décharge des premier et second types au niveau de l'écart (13) entre l'électrode outil (11) et la pièce à usiner (12) pour enlever de la matière à la pièce à usiner (12), où un rapport entre les impulsions de décharge des premier et second types appliquées à l'électrode outil est ainsi défini qu'une usure prédéterminée de l'électrode outil (11) est provoquée.

2. Procédé de commande d'un appareil d'usinage par électroérosion selon la revendication précédente 1, comprenant en outre les étapes suivantes :
définir un premier groupe d'impulsions de décharge (groupe 1), comprenant une valeur de durée d'impulsion la plus faible étant une valeur où l'usure frontale et/ou l'usure latérale de l'électrode outil atteint zéro et comprenant des valeurs de durée d'impulsion quelconques étant supérieures à cette valeur ; et
définir un second groupe d'impulsions de décharge (groupe 2), comprenant des valeurs de durée d'impulsion étant inférieures à la valeur de durée d'impulsion pour laquelle l'usure frontale et/ou latérale atteint une valeur nulle.

3. Procédé de commande d'un appareil d'usinage par électroérosion selon l'une quelconque des revendications précédentes, dans lequel les durées d'impulsion des impulsions de décharge du premier groupe et du second groupe sont en outre déterminées par au moins un des paramètres de processus suivantes : la surface de l'électrode, le type d'impulsion, le courant maximum par impulsion, la durée de pause entre des trains d'impulsions successifs, l'écart entre l'électrode outil et la pièce à usiner, le matériau constituant la pièce à usiner, le matériau constituant l'électrode, l'huile diélectrique, l'intervalle de temps entre deux cycles de rinçage, la profondeur d'usinage.

4. Procédé de commande d'un appareil d'usinage par électroérosion selon la revendication 2, dans lequel la durée (T_{S}) de l'impulsion de décharge du second type (16, 19, 23, 26, 30, 40, 44, 48, 51, 54) est choisie dans le second groupe et dans lequel la durée (T_{L}) de l'impulsion de décharge du premier type (15, 18, 22, 25, 27, 39, 43, 47, 50, 53) est choisie dans le premier groupe.

5. Procédé de commande d'un appareil d'usinage par électroérosion selon l'une quelconque des revendications précédentes, dans lequel l'impulsion de décharge de premier type et/ou de second type est spécifiée au moins par une valeur initiale de courant (Iₘᵢₙ), un courant final (I_{L/S}), et un chemin suivi pour une montée de courant (31).

6. Procédé de commande d'un appareil d'usinage par électroérosion selon l'une quelconque des revendications précédentes, dans lequel le courant de décharge maximal par impulsion se situe dans la plage s'étendant de 0,1 A à 120 A.

7. Procédé de commande d'un appareil d'usinage par électroérosion selon l'une quelconque des revendications précédentes, dans lequel l'impulsion de décharge de premier type (27) et/ou l'impulsion de décharge de second type (30) a une forme carrée et/ou présente une section à pente croissante (28) et/ou présente une section à pente décroissante avec des paramètres principaux : le courant initial, le courant final et le chemin suivi pour l'élévation du courant et/ou la chute du courant entre ces deux points.

8. Procédé de commande d'un appareil d'usinage par électroérosion selon l'une quelconque des revendications précédentes, dans lequel au moins une impulsion de décharge parmi les impulsions de décharge du premier type (15, 18, 22, 25, 27, 39, 43, 47, 50, 53) et du second type (16, 19, 30, 40, 44, 48, 51, 54) comprend une section en pointe (20).

9. Procédé de commande d'un appareil d'usinage par électroérosion selon l'une quelconque des revendications précédentes, dans lequel l'au moins une impulsion de décharge du second type (16, 19, 30, 40, 44, 48, 51, 54) a une polarité positive ou négative (23, 26).

10. Procédé de commande d'un appareil d'usinage par électroérosion selon l'une quelconque des revendications précédentes, dans lequel l'au moins une impulsion de décharge du second type (26) est générée par une décharge capacitive.

11. Procédé de commande d'un appareil d'usinage par électroérosion selon l'une quelconque des revendications précédentes, dans lequel l'électrode outil (11) présente au moins une section ayant une structure qui est à l'échelle moyenne avec une surface d'électrode instantanée entre 10 mm² et 1 mm² ou à petite échelle avec une surface d'électrode instantanée inférieure à 1 mm² ou avec une structure ayant une dimension inférieure à 1 mm.

12. Procédé de commande d'un appareil d'usinage par électroérosion selon l'une quelconque des revendications 1 à 10, dans lequel dans un train d'impulsions (14, 17, 21, 24), le film de protection contre l'usure sur l'électrode outil (11) formé par l'impulsion de décharge de premier type (15, 18, 22, 25, 27, 39, 43, 47, 50, 53) est presque complètement érodé par l'au moins une impulsion de décharge de second type (16, 19, 23, 26, 30, 40, 44, 48, 51, 54) de ce train d'impulsions (14, 17, 21, 24, 38, 42, 46, 49, 52) de telle sorte que l'usure soit nulle ou quasiment nulle.

13. Procédé de commande d'un appareil d'usinage par électroérosion selon l'une quelconque des revendications précédentes, dans lequel un temps d'arrêt (59) entre deux trains d'impulsions consécutifs est supérieur à toute durée de pause (58) entre deux impulsions consécutives dans un train d'impulsions.

14. Procédé de commande d'un appareil d'usinage par électroérosion selon l'une quelconque des revendications précédentes, dans lequel le rapport des impulsions de décharge des premier et second types est maintenu constant.

15. Appareil d'usinage par électroérosion comprenant :
une électrode outil (11),
une table de travail (3) destinée à recevoir une pièce à usiner (12),
un générateur d'impulsions (4) pour générer des impulsions de décharge, et
une commande (2) pour commander l'appareil d'usinage par électroérosion (1),
où la commande (2) exécute le procédé selon l'une quelconque des revendications précédentes.

16. Appareil d'usinage par électroérosion selon la revendication 15, dans lequel l'appareil est un appareil d'usinage par électroérosion à défoncer ou un appareil d'usinage par électroérosion à percer ou un appareil d'usinage par électroérosion à fraiser.
